# EUROPEAN PATENT APPLICATION

(11) **EP 1 416 710 A2**
(43) Date of publication of application: **06.05.2004**
(21) Application number: 03256570.7
(22) Date of filing: 17.10.2003
(51) Int. Cl.: H04N 1/00, G06F 17/60

(54) **Signal processing apparatus, perception apparatus, printing apparatus, and broadcasting method**

(30) Priority: 01.11.2002 JP 2002320138; 02.10.2003 JP 2003344495
(71) Applicant: CANON KABUSHIKI KAISHA, Tokyo (JP)
(72) Inventor: Shikata, Yasushi Canon Kabushiki Kaisha, Tokyo (JP); Matsubayashi, Kazuhiro Canon Kabushiki Kaisha, Tokyo (JP); Maruyama, Kazuna Canon Kabushiki Kaisha, Tokyo (JP)
(74) Representative: Beresford, Keith Denis Lewis

(57) **Abstract**

A signal processing apparatus includes a receiving circuit for receiving data transmitted from a sender so as to be simultaneously receivable by a plurality of receivers, and a processing circuit for outputting, to a printer, print data in accordance with both of the data received by the receiving circuit and user information of a user of the signal processing apparatus.

## Description

### BACKGROUND OF THE INVENTION

### Field of the Invention

The present invention relates to a signal processing apparatus having a capability of receiving data transmitted from a sender so as to be simultaneously receivable by a plurality of receivers, and also to a perception apparatus and a printing apparatus using such a signal processing apparatus. The present invention also relates to a method of broadcasting.

### Description of the Related Art

BS (Broadcast Satellite) digital broadcasting started in 2,000, and CS (Communication Satellite) digital broadcasting and a digital terrestrial broadcasting are planned to be started. In digital broadcasting, new types of data broadcast services are available in addition to conventional broadcast services.

One of features of data broadcast services is bi-directionality. When a viewer is viewing a data broadcast program, the viewer can change a screen being currently viewed to a desired screen by operating a focus on the screen using a remote controller.

Another great feature of data broadcast services is the capability of dealing with contents of various kinds of media. In data broadcasting, in contrast to conventional broadcasting in which basically only moving pictures are dealt with, characters, graphics, and still images can also be dealt with. In BS digital broadcasting, a powerful layout description language is used to express a data broadcast screen. This makes it possible to express a screen in a very attractive fashion.

Various kinds of services using the above-described features of the bi-directionality and the capability of dealing with multimedia contents are now available. For example, additional information is provided to viewers by presenting data associated with a broadcast program. On-line shopping and on-line banking are also available.

Although not currently available, it is planned to provide print service in BS digital broadcasting. Data broadcasting, in which a lot of still images and characters are used, is suitable for providing print service. When a viewer is viewing a data broadcast program, the viewer may find a lot of data the viewer wants to print or save for future usage. Specific examples of information that viewers may want to save or print are text information such as URLs or detailed descriptions, and still images such as maps, photographs, or time tables.

Data broadcast programs may be formed on the premise that data will be printed. For example, in data broadcast programs of introducing shops, theme parks, or the like, printable data of coupons, tickets, maps, description of articles on sale, or the like may be transmitted together with broadcasting data in a multiplexed fashion so that viewers can print desired data.

Provision of print service is also useful for advertisements presented during a data broadcast program. Coupons provided to viewers by means of printing can attract viewer's attention. The print service makes it possible to quickly provide detailed information about an article on sale to a viewer who gets interested in the article.

To realize provision of print service in data broadcasting, it is necessary to extend the broadcast standards. One possible method of acquiring print contents is to receive print contents multiplexed with broadcasting data, and another possible method is to download print contents via the Internet using a modem disposed in a digital television set. In the current BS digital broadcasting systems, the transmission rate of the modem is low and compatibility with the Internet is not good, and thus it is difficult to realize the method using the modem. In the future systems such as the CS digital broadcasting system, the transmission rate of the modem will be high enough and the compatibility with the Internet will be improved, and thus the method using the modem might be realized.

There are various candidates for the format of print contents multiplexed with broadcast data. For example, the BML (Broadcast Markup Language) used as the format of data of data broadcasting is also used for print contents. The BML is a version of the XHTML1.0 (extensible HTML1.0) extended for use in broadcasting. In the BML, styles are described using a version of the CSS (Cascading Style Sheets) extended for use in broadcasting. To use the BML as a format of print content, it is required to extend elements and properties of the BML and it is also required to extend the CSS.

It is also necessary to extend the functions of the EXMA script of the BML operation description language so that the extended functions can be used as extended broadcast functions for controlling the printing operation. The extended broadcast functions may include a function used by a digital television set to request a printer to start printing or request the printer to provide information indicating the status of the printer.

Although print service is not yet available in practical data broadcasting, necessary technology is being achieved, and specifications of print service will be added to the broadcast standards in the near future.

A technique associated with the present invention may be found, for example, in Japanese Patent Laid-Open No. 2002-158979 (corresponding US patent applications has been laid open as 2002060748). A data broadcast receiving/playback apparatus having a capability of outputting print data to a printer is disclosed in the patent cited above.

### SUMMARY OF THE INVENTION

A concern of the present invention is to provide a novel signal processing apparatus. Another object of the present invention is to provide a perception apparatus and a printing apparatus using the novel signal processing apparatus. Another object of the present invention is to provide a novel broadcasting method.

In an aspect, the present invention provides a signal processing apparatus including a receiving circuit for receiving data transmitted from a sender so as to be simultaneously receivable by a plurality of receivers, and a processing circuit for outputting, to a printer, print data in accordance with both of the data received by the receiving circuit and user information of a user of the signal processing apparatus.

In this signal processing apparatus, the processing circuit may include at least a circuit for generating the print data to be output to the printer by extracting, on the basis of user information, a part of the received data transmitted so as to be simultaneously receivable by the plurality of receivers.

The print data to be output to the printer may be data selected from the data transmitted so as to be simultaneously receivable by the plurality of receivers, or the print data may be produced on the basis of the selected data. For example, basic data are prepared and the print data may be produced by rewriting the above selected data on the basis of basic data. The basic data for use in producing the print data by means of rewriting may be transmitted from the sender. The selection of the data may be performed in such manner that a plurality of data selectable as data for use in producing the print data by means of rewriting are received from the sender, and at least one of the received data is selected. The plurality of data received from the sender may be stored so that the selection of the data can be easily performed. Preferably, the data is in digital form.

In the signal processing apparatus, the data transmitted so as to be simultaneously receivable by the plurality of receivers may include data selectable as data to be used in the print data and may also include data for use in sequentially generating stimuli perceptible by a user via a perception device.

The data for use in sequentially generating stimuli perceptible by a user via the perception device may be image data or audio data. When the data for use in sequentially generating stimuli perceptible by a user via the perception device is image data, the perception device may be a display. In the case in which the data for use in sequentially generating stimuli perceptible by a user via the perception device is audio data, the perception device may be a speaker or a similar device for generating a sound by means of vibrations. Specific examples of displays include a CRT, a projection display, and a flat panel display using a display device such as a liquid crystal light valve, a plasma cell, an electron emission device, or an electroluminescent device.

In the signal processing apparatus, the processing circuit may include at least a circuit for outputting, to the outside of the signal processing apparatus, a signal for requesting the print data or data from which the print data is obtainable, in accordance with data transmitted so as to be simultaneously receivable by the plurality of receivers and in accordance with information associated with a user of the signal processing apparatus.

The above request signal may be addressed to the sender or a controller device that controls transmission of data from the sender. Alternatively, the request signal may be addressed to a transmitting apparatus installed separately from the sender or may be a controller device that controls transmission of data from the transmitting apparatus. The print data or the data from which the print data is obtainable, transmitted in response to the request signal, may be received by the above-described receiving circuit or another receiving circuit included in the processing circuit.

In the signal processing apparatus, the user information may include at least information indicating a behavior history of the user.
In the signal processing apparatus, the data transmitted so as to be simultaneously receivable by the plurality of receivers may include at least data for use in sequentially generating stimuli perceptible by a user via the perception device, and the information indicating the behavior history of the user may be information indicating times at or for which the user perceived the stimuli generated on the basis of the data.

The information indicating the times at which the user perceived the stimuli may be information indicating the length of a perception time, a perception start time, the length to a time during which perception is intermitted, a time at which intermission of the perception is started, or a perception end time.

In the signal processing apparatus, the user information may include at least information indicating a property of the user.

Specific examples of the information indicating the property of the user are the region information such as an address of the user, the sex of the user, the age of the user, and the identification of the user.

In the signal processing apparatus, the user information may include at least identification information for identifying the signal processing apparatus.

In the signal processing apparatus, the user information may be acquired on the basis of data received by the receiving circuit.

In another aspect, the present invention provides a perception apparatus including a perception device and the signal processing apparatus described above, wherein the data transmitted so as to be simultaneously receivable by the plurality of receivers includes at least data for use in sequentially generating stimuli perceptible by a user via the perception apparatus.

In another aspect, the present invention provides a printing apparatus including the signal processing apparatus described above and a printer for performing printing in accordance with the print data output from the processing circuit.

In another aspect, the present invention provides a broadcasting method including the step of transmitting first data for producing print data to be printed by a printer and second data specifying signal processing to be performed on the first data to produce the print data depending on information associated with a user of a particular signal processing apparatus, in such a manner that the first data and the second data can be simultaneously received by a plurality of signal processing apparatuses.

The first data for producing print data to be printed by a printer and the second data specifying signal processing to be performed on the first data to produce the print data depending on the information associated with the user of the particular signal processing apparatus may be transmitted together in the form of a single content or may be transmitted as separate contents. The first data and the second data may be transmitted at the same time or may be transmitted at different times.

Further features and advantages of the present invention will become apparent from the following description of the preferred embodiments with reference to the attached drawings.

### BRIEF DESCRIPTION OF THE DRAWINGS

Fig. 1 is a block diagram generally showing a print system according to a first embodiment of the present invention.

Fig. 2 is a block diagram showing a construction of a digital television set.

Fig. 3 is a diagram showing an example of data broadcasting screen.

Fig. 4 is a flow chart showing a process of printing a data broadcast content, performed in a printing system according to a first embodiment of the present invention.

Fig. 5 is a flow chart showing a part of a process of printing data broadcast content associated with a specific example of a data broadcast program.

Fig. 6 is a flow chart showing a part of a process of printing data broadcast content associated with another specific example of a data broadcast program.

Fig. 7 is a flow chart showing a part of a process of printing data broadcast content associated with another specific example of a data broadcast program.

Fig. 8 is a flow chart showing a process of printing a data broadcast content, performed in a printing system according to a second embodiment of the present invention.

Fig. 9 is a flow chart showing a part of a process of printing data broadcast content associated with another specific example of a data broadcast program.

Fig. 10 is a flow chart showing a part of a process of printing data broadcast content associated with another specific example of a data broadcast program.

Fig. 11 is a flow chart showing a part of a process of printing data broadcast content associated with another specific example of a data broadcast program.

Fig. 12 is a flow chart showing a process of printing a data broadcast content, performed in a printing system according to a third embodiment of the present invention.

Fig. 13 is a flow chart showing a process of printing a data broadcast content, performed in a printing system according to a fourth embodiment of the present invention.

### DESCRIPTION OF THE PREFERRED EMBODIMENTS

The technique of printing data in a different manner depending on user information by performing signal processing specified by a sender is described below with reference to specific embodiments.

In the embodiments described below, it is assumed that a display unit is used as a perception device, and a print content is rewritten on the basis of a sub print-content included in a data broadcast content or the data broadcast content, and the resultant rewritten print content is output to a printer.

Good examples of contents whose print image should be changed depending on the viewing status are tickets or coupons that must be identified for each ticket or coupon when being printed, and contents describing outlines of programs.

In data broadcasting linked with a long-hour digital broadcast program, outline information of the program to be printed is varied depending on when a viewer starts to view the program, so that the viewer easily understands the outline of the program.

When a coupon is allowed to be printed during a broadcast program, the discount rate of the coupon is varied depending on the cumulative viewing time or a region where the viewer is viewing the program. This can increase the motivation of the viewer for continuing to view the program.

In a data broadcast program in which lottery tickets are allowed to be printed, lottery tickets whose number varies from ticket to ticket are allowed to be printed at the beginning of the program, and winning numbers are displayed (or printed) at the end of the program. This can increase the motivation of the viewer for continuing to view the program.

When a plurality of print contents to which the same advertisement is currently attached are printed in the middle of a program, only the advertisement is changed.
This makes it possible for broadcast stations to obtain new means for providing advertisements.

As can be understood from the above description, changing print images depending on the viewing status makes it possible to provide more attractive and effective programs.

Specific embodiments of the present invention are described below.

### First Embodiment

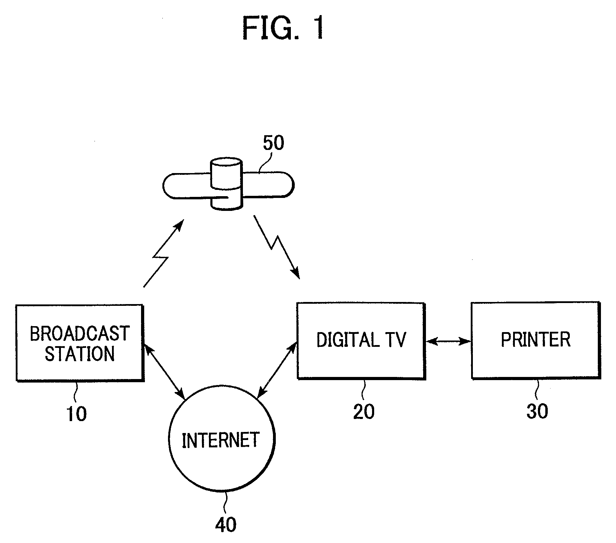

Fig. 1 is a block diagram generally showing a print system according to a first embodiment of the present invention. In this system, a digital television set 20 and a printer 30 are connected with each other directly or via a network such that bi-directional communication between them is possible.

The digital television set 20 is connected to a broadcast station 10 (or a data center of the broadcast station 10, hereinafter, the term "broadcast station" will be used to generically describe a broadcast station and a data center) via the Internet 40 so that the digital television set 20 can communicate with the broadcast station 10.

The digital television set 20 is capable of receiving a digital broadcast transmitted from the broadcast station 10. In the present embodiment, as shown in Fig. 1, digital broadcast programs are broadcast via a communication satellite 50 or a CATV. Digital broadcast programs include data broadcast programs.

Furthermore, in digital broadcasting, print contents associated with data broadcast programs are transmitted in a multiplexed fashion. Print contents are described in a BML format or using a similar language. Herein, the language similar to the BML refers to such a language having the capability of structured description of data and the capability of describing the style and also having the capability of reconstructing data, for example, by means of rewriting. For example, in addition to the BML, an extended markup language based on the XML (Extensible Markup Language) may be used.

When a print content has the same format as that of data of a data broadcast program, the print content may be transmitted as a part of the data broadcast content, or the print content may be transmitted separately. The present embodiment may be applied to any case. In the case in which a print content and a data broadcast content are combined in a single piece of data, styles of the print content and the data broadcast content, respectively, are described in the data so as to specify which part of the data is to be output to which device, the digital television set 20 or the printer 30. It is required that the language used herein have the capability of describing the styles.

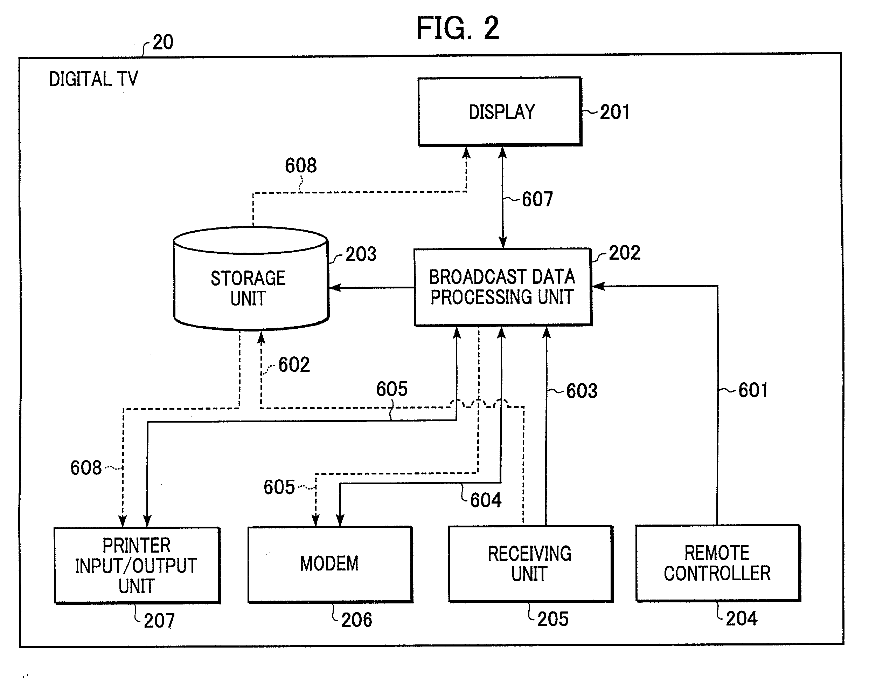

Fig. 2 is a block diagram showing a construction of the digital television set 20. In Fig. 2, solid lines between modules denote flows of control, and broken lines denote flows of data. The respective modules of the digital television set 20 are described below. The digital television set 20 includes a signal processing apparatus and a display 201 serving as a perception device. The signal processing apparatus includes a receiving unit 205 serving as a receiving circuit. The signal processing apparatus includes a signal processing circuit including a broadcast data processing unit 202, a storage unit 203, a remote-controller receiver 204, a modem 206, and a printer input/output unit 207. The digital television set 20 receives, via the receiving unit 205, digital broadcasting data transmitted from the broadcast station 10. In the receiving unit 205, a data broadcast content 602 included in digital broadcasting data is separated from the other data and decoded. The resultant data broadcast content 602 is stored in the storage unit 203. In digital broadcasting, generally, the data broadcast content 602 stored in the storage unit 203 is supplied as display data 608 to the display 201 with proper timing under the control of the broadcast data processing unit 202 and displayed on the display 201.

If a viewer presses a key on the remote controller in the middle of a data broadcast program, key information is transmitted as remote control information 601 to the broadcast data processing unit 202 via the remote-controller receiver 204. On receiving the remote control information 601, the broadcast data processing unit 202 acquires information indicating an operation procedure corresponding to the received remote control information 601 from the data broadcast content 602 stored in the storage unit 203. In accordance with the operation procedure, the broadcast data processing unit 202 performs a proper process. If necessary, the broadcast data processing unit 202 transmits display control information 607 to the display 201. For example, if the remote control information 601 is an arrow key command to move the focus on the screen, the broadcast data processing unit 202 accesses the data broadcast content 602 stored in the storage unit 203 to determine in which direction to move the focus. The broadcast data processing unit 202 then transmits display control information 608 indicating how to move the focus to the display 201. If an interrupt event occurs as a result of movement of the focus, the interrupt event is executed. The remote controller used herein may be similar to that currently used in BS digital broadcasting.

If a broadcast event 603 is transmitted from the broadcast station 10 in the middle of a data broadcast program, the broadcast event 603 is supplied to the broadcast data processing unit 202 via the receiving unit 205. If the broadcast data processing unit 202 receives the broadcast event 603, the broadcast data processing unit 202 acquires information indicating an operation procedure corresponding to the received broadcast event 603 from the data broadcast content 602 stored in the storage unit 203. In accordance with the operation procedure, the broadcast data processing unit 202 performs a proper process. The broadcast event 603 is used, for example, to transmit a notification of the end of a program.

In a case in which a data broadcast program allows two-way communication with the broadcast station 10, the broadcast data processing unit 202 transmits modem control information 604 to the modem 206 to make connection with the broadcast station 10 and transmit data to the broadcast station 10. In such a data broadcast program, if printing is allowed, a data broadcast content 602 received from the broadcast station 10 via the receiving unit 205 includes a print content 606. As described earlier, the print content may be a part of data in which both the print content and the data broadcast content are combined together. The print content 606 is stored in the storage unit 203 as well as the data broadcast content 602.

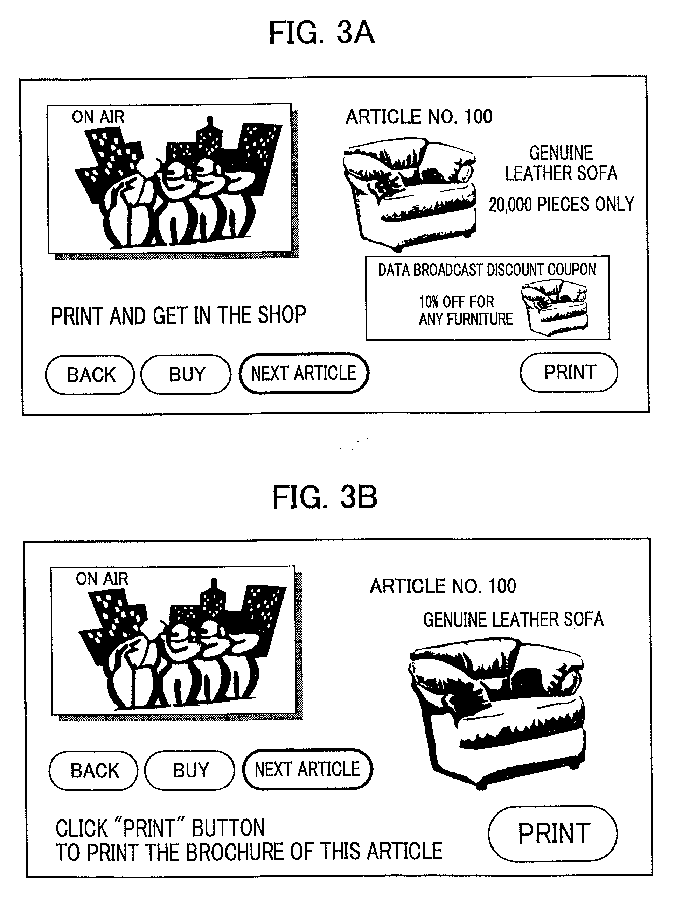

In a data broadcast program, a viewer may be prompted to print data in various manners. Fig. 3A shows an example in which a print preview and a message prompting a viewer to print are displayed on a TV screen. In an example shown in Fig. 3B, only a message indicating that there is printable data is displayed without displaying a preview of the printable data. In general, the former manner is suitable for tickets, coupons, and the like, and the latter manner is suitable for articles on sale that need detailed information.

On the data broadcast screen such as that shown in Fig. 3A or 3B, if a viewer moves the focus onto a print button and presses an apply key on the remote controller, the broadcast data processing unit 202 receives remote control information 601 (an apply command, in this specific case) via the remote-controller receiver 204. An operation that is to be performed in response to pressing the apply key of the remote controller when the focus is on the print button is specified by a sender such as a broadcast station, a producer of a program, or a client who has ordered production and/or broadcasting of a program, and a description of the specified operation is included in the data broadcast content 602. The broadcast data processing unit 202 accesses the storage unit 203 and acquires information indicating the operation procedure corresponding to the remote control information 601 (the apply command, in this specific case). In accordance with the acquired operation procedure, the broadcast data processing unit 202 performs the operation. If the specified operation procedure is a printing procedure, the broadcast data processing unit 202 transfers the print content 606 stored in the storage unit 203 to the printer 30 connected to the digital television set 20 via the printer input/output unit 207. In accordance with the received print content 606, the printer 30 performs printing. In the above process, the broadcast data processing unit 202 also transmits setting information 605 associated with the printing operation to the printer 30. The setting information 605 includes information specifying the number of sheets to be printed, identification information of the content, and identification information identifying each matter to be printed.

The printer 30 includes an interface for receiving the print content 606 and the printer control information 605 from the digital television set 20. The interface is also used, for example, when information indicating the result of the printing operation is returned to the digital television set 20. In the case in which the printer 30 is directly connected to the digital television set 20, the interface may be a serial bus such as an IEEE1394 bus. The printer 30 also includes a driver for controlling the operation of printing the print content 606 and means for performing image processing. The driver and/or the means for image processing may be installed on the digital television set 20. In this case, the printer 30 is not necessary to have the driver or the means for image processing.

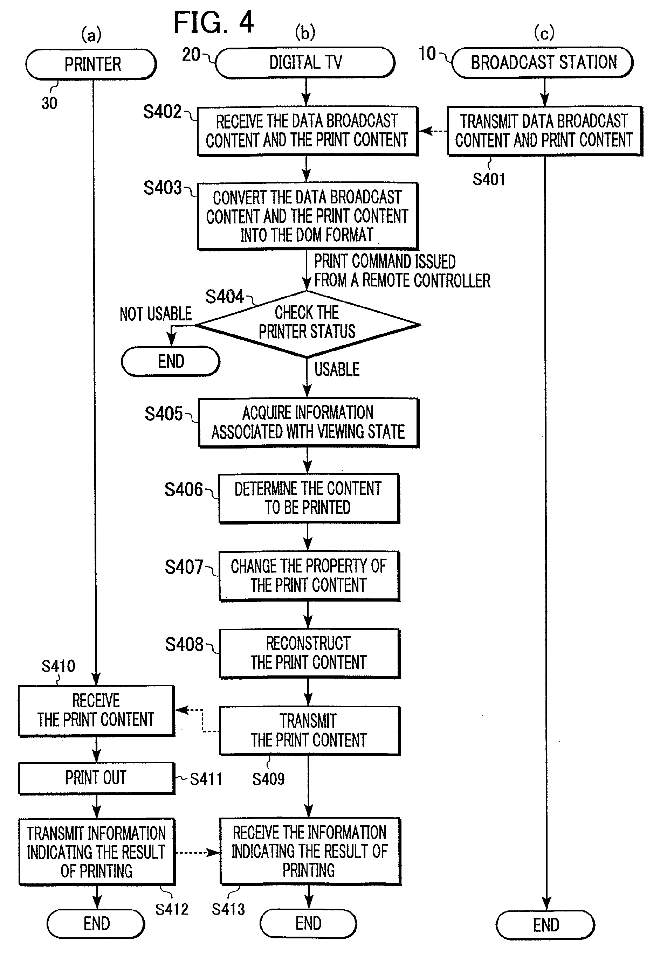

Referring to Fig. 4, the process of printing data associated with data broadcasting in the printing system is described below. In Fig. 4, column (a) shows the process performed by the printer 30, column (b) shows the process performed by the digital television set 20, and column (c) shows the process performed by the broadcast station 10.

The broadcast station 10 transmits a data broadcast content 602 and a print content 606 together with broadcast data in a multiplexed fashion to the digital television set 20 (step S401). The data broadcast content 602 includes information specifying signal processing necessary to produce print data to be output to the printer and also includes information associated with a plurality of sub print-contents to be selectably used in producing the print data. If the digital television set 20 receives the above data (step S402), the digital television set 20 stores the received data in the storage unit 203 (step S403).

When the digital television set 20 receives the data broadcast content 602 and stores the received data broadcast content 602, the print content 606 is not necessarily received and stored at the same time. In some cases, the print content 606 is received and stored when a print command is issued by a viewer by using a remote controller and is stored in the storage unit 203. When the print content 606 is received and stored depends on the broadcast data. In a case in which the data broadcast content 602 and the print content 606 are identical to each other, the print content 606 is produced by copying the data broadcast content 602 when the data broadcast content 602 is stored in the storage unit 203, and the data broadcast content 602 and the print content 606 are stored separately. This is because the print content 606 must be rewritten in a later step.

The data broadcast content 602 stored in step S403 described above is described in the BML or a similar language, and the data stored in the storage unit 203 has a data structure according to the DOM (Document Object Model) or a similar data format. Herein, the "data format similar to the DOM" refers to a data format that allows access to data stored in the storage unit 203 from the outside and that allows at least reading and writing data.

After completion of storing data in the storage unit 203 in step S403, the digital television set 20 presents a screen associated with the data broadcast content 602 to a viewer, that is, a user of the digital television set 20. The presented screen includes a message prompting the viewer to print data. If the viewer issues a print command using the remote controller, the digital television set 20 checks the status of the printer 30 (step 5404). If the printer 30 is not connected or the power of the printer 30 is not turned on and thus printing cannot be performed, the process is terminated without proceeding to the next step. If the printer 30 is available, the digital television set 20 accesses the data broadcast content 602 stored in the storage unit 203, determines which user information is needed in performing the signal processing specified by the data broadcast content 602, and acquires the user information (step S405). By this point of time, the print content 606 must have been stored, in a similar data format to the data broadcast content 602, in the storage unit 203. In accordance with the acquired user information indicating the viewing status, a sub print-content 609 to be used in partially rewriting the print content 606 is selected (step S406).

After completion of selecting the sub print-content 609, the print content 606 stored in the storage unit 203 is partially rewritten in accordance with the procedure described in the data broadcast content 602 (step S407). In the case in which a markup language is used, a part of the print content 606 to be rewritten is a property value or text data between elements (tags). The partial rewriting of the print content 606 is performed using the sub print-content 609.

Thereafter, the print content 606 is reconstructed so as to include the selected sub print-content (step S408). Herein, "reconstruction" refers to converting data into an original BML format or into data described in a similar original language. In a case in which the printer 30 is not adapted to the above data format, the print content 606 is converted into a data format that can be dealt with by the printer 30. The resultant reconstructed print content is supplied as print data to the printer 30 (step S409). Via the above steps, information indicating the signal processing which is specified to be performed by the sender and which is included in the data received by the receiving circuit and also print data in accordance with the user information are output to the printer 30. The print data is obtained by selecting one of sub print-contents included in the data received by the receiving circuit.

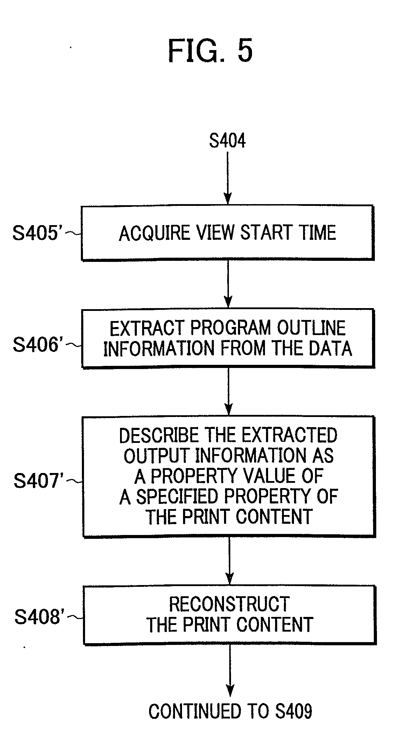

Specific examples of processes performed in steps S405 to S408 are described below. For example, in data broadcasting linked with a long-hour digital broadcast program, outline information of the program to be printed may be varied depending on when a viewer starts to view the program, as described below with reference to a flow chart shown in Fig. 5. If it is determined in step S404 that the printer 30 is available, information indicating the viewing status described in the user behavior history information is acquired from the data broadcast content 602 stored in the storage unit 203.

In this example, the information indicating the viewing status described in the user behavior history information is that indicating a relative time at which the viewer started viewing the program (hereinafter, referred to as a view start time). Thus, the time at which the viewer started viewing the program is acquired (step S405'). If necessary, the time at which the program started is also acquired as user behavior history information. The view start time may be automatically stored by the digital television set 20, or may be stored in the digital television set 20 using an operation description language (such as the ECMA script in the BML). The program start time is acquired from the received broadcast data. In the case of BS digital broadcasting, the program start time can be acquired from SI (Service Information) included in broadcast data.

After acquiring the view start time, the sub print-content 609 to be printed is determined on the basis of the view start time (step S406'). The sub print-content 609 can be selected from a plurality of sub print-contents which are included in the data broadcast content 602 and which are different from each other depending on the view start time. In the present embodiment, the sub print-content 609 is data used to form a part of the print content 606 stored in the storage unit 203. The sub print-content 609 may be simple text data or may be a combination of text data, a still image, and a graphics image. In this specific example, the sub print-content 609 includes text data and a still image indicating the outline of the program, wherein the outline indicated by the text data and the still image varies depending on the view start time.

If the sub print-content 609 to be printed is determined, the sub print-content 609 is written as a property value of the print content 606 stored in the storage unit 203 (step S407'). In the case in which the sub print-content 609 includes only text data, the text data may be written between elements (tags) in the print content 606. Information indicating in which property value or between which elements (tags) the sub print-content 609 should be written in the print content 606 is described in the data broadcast content 602.

After completion of the above step, the print content 606 stored in the DOM format or a similar format in the storage unit 203 is reconstructed into a print format that can be dealt with by the printer 30 (step S408').

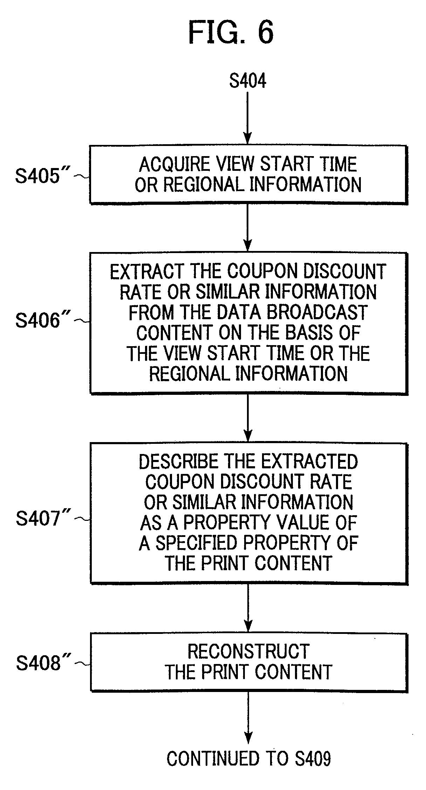

When a coupon or an advertisement can be printed during a broadcast program, the discount rate of the coupon or the content of the advertisement may be varied depending on the cumulative viewing time or a region where the viewer is viewing the program, as described below with reference to a flow chart shown in Fig. 6. If it is determined in step S404 that the printer 30 is available, the data broadcast content 602 stored in the storage unit 203 is accessed, user property information to be acquired is determined, and the user property information is acquired.

In this specific case, the user property information is information indicating the region where the user lives. The view start time described in the user behavior history information is also acquired together with the user property information. For the above purpose, in step S405'', information indicating the view start time and region information are acquired. Herein, of various items of the region information, the address and/or the telephone number of the user are assumed to be already registered in the digital television set 20. Thus, the user property information is acquired by reading information registered in the digital television set 20.

If the view start time and the region information are acquired, the sub print-content 609 to be printed is determined on the basis of the acquired information (step S406''). The sub print-content 609 can be selected from a plurality of sub print-contents which are included in the data broadcast content 602 and which are prepared depending on the view start time and the region of the user. Herein, the sub print-content 609 refers to basic data used in reconstructing the print content 606 stored in the storage unit 203 thereby producing print data. The resultant print data including the reconstructed print content 606 is output. The sub print-content 609 may be simple text data or may be a combination of text data, a still image, and a graphics image. In this specific example, the sub print-content 609 includes text data and a still image indicating the discount rate of the coupon and/or the advertisement, wherein the discount rate and/or the advertisement are varied depending on the cumulative viewing time and/or the region of the user.

If the sub print-content 609 to be printed is determined, the sub print-content 609 is written as a property value of the print content 606 stored in the storage unit 203 (step S407"). In the case in which the sub print-content 609 includes only text data, the text data may be written between elements (tags) in the print content 606. Information indicating in which property value or between which elements (tags) the sub print-content 609 should be written in the print content 606 is described in the data broadcast content 602.

After completion of the above step, the print content 606 stored in the DOM format or a similar format in the storage unit 203 is reconstructed into a print format that can be dealt with by the printer 30 (step S408'').

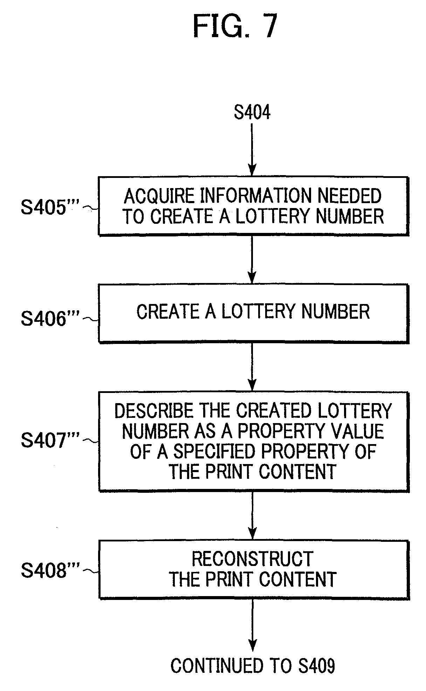

In a data broadcast program, a print content including a lottery number that varies from one digital television set to another may be allowed to be printed at the beginning of the program and winning numbers may be displayed (or printed) at the end of the program, as described below with reference to a flow chart shown in Fig. 7. This process shown in Fig. 7 is performed only at the beginning of the program. In order to make it possible to provide winning numbers at the end of the program, the print content 606 transmitted from the broadcast station 10 must be different between the beginning and the end of the program. If it is determined in step S404 that the printer 30 is available, the data broadcast content 602 stored in the storage unit 203 is accessed information associated with the viewing status to be acquired is determined, and the information is acquired. (step S405''').

Herein, the information to be acquired may be user property information such as user identification information or may be identification information identifying a digital television set or a signal processing apparatus included in a digital television set. In a later step, on the basis of the information acquired herein, a unique lottery number is determined for each digital television set 20 or each user. The sub print-content 609 to be printed is determined on the basis of the above acquired information (step S406'''). The sub print-content 609 may be determined in the data broadcast content 602 by means of calculation.

The determined sub print-content 609 is written as a property value of the print content 606 stored in the storage unit 203 (step S407"'). In the case in which the sub print-content 609 includes only text data, the text data may be written between elements (tags) in the print content 606. Information indicating in which property value or between which elements (tags) the sub print-content 609 should be written in the print content 606 is described in the data broadcast content 602.

After completion of the above step, the print content 606 stored in the DOM format or a similar format in the storage unit 203 is reconstructed into a print format that can be dealt with by the printer 30 (step S408''').

Specific examples of the processes performed in steps S405 to S408 have been described above. The following steps S409 and so on of the process of printing data associated with data broadcasting in the printing system are described below. If the print content 606 is converted in step S408 into a data format that can be dealt with by the printer 30, the resultant data is supplied as print data to the printer 30 together with setting information 605 necessary in printing operation (step S409).

The setting information 605 used in printing operation includes information indicating the number of sheets to be printed. The number of sheets to be printed may be described in the data broadcast content 602 or may be specified by a viewer using the remote controller. The setting information 605 used in printing operation may include identification information identifying a content. In the case of BS digital broadcasting, the content identification information may be program identification information described in SI information or a module ID. Furthermore, the setting information 605 used in printing operation may include identification information identifying each matter to be printed.

If the printer 30 receives the print content 606 and the setting information 605 transmitted in step S409 (step S410), the printer 30 makes setting and performs printing on a specified number of sheets (step S411). In some cases, the content identification information is also printed.

If the printing is completed, the printer 30 notifies the digital television set 20 of the completion of printing (step S412). If the digital television set 20 determines, from the notification from the printer 30, that the printing has been successfully completed, the digital television set 20 ends the process (step S413).

In the present embodiment, as described above, when a viewer of a data broadcast program issues a print command to print content 606 multiplexed with broadcast data transmitted from the broadcast station 10, printing is performed in accordance with an operation description in a data broadcast content 602 such that information indicating the viewing status is acquired, a sub print-content 606 is selected from the data broadcast content in accordance with the acquired viewing status information, the sub print-content 606 is incorporated into the print content, and the sub print-content 606 is printed. This makes it possible to vary the print content to be printed depending on the viewing status. Thus, it becomes possible to vary program outline information to be printed, depending on, for example, the time at which a viewer started viewing a program. It also becomes possible to change the discount rate of a coupon to be printed, depending on the accumulative viewing time of a viewer. Thus, it becomes possible to produce much more effective data broadcast programs than can be achieved by known techniques.

### Second Embodiment

A printing system according to a second embodiment of the present invention is described below. The general system configuration and the configurations of the digital television set 20 and the printer 30 are similar to those employed in the first embodiment described above. The difference from the first embodiment is that the description of the sub print-content 609 is included not in the data broadcast content 602 but in the print content 606, and thus the printing process is performed differently.

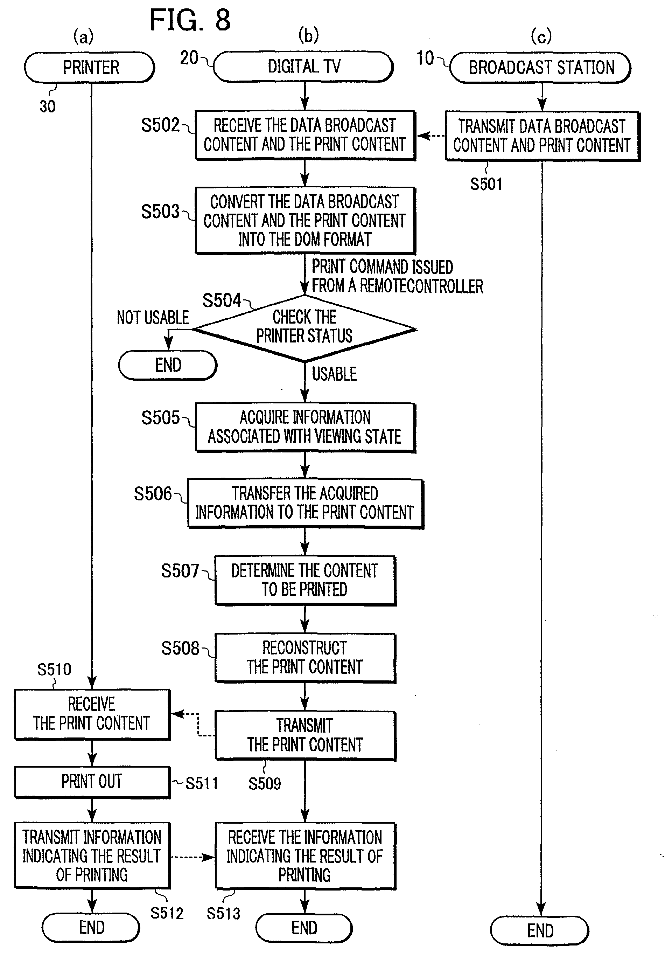

Referring to Fig. 8, the printing process performed in the printing system is described below. In Fig. 8, column (a) shows the process performed by the printer 30, column (b) shows the process performed by the digital television set 20, and column (c) shows the process performed by the broadcast station 10. Steps S501 to S504 and steps S508 to S513 shown in Fig. 8 are similar to steps S401 to S404 and steps S408 to S413, respectively, shown in Fig. 4, according to the first embodiment, but steps S505 to S507 are different from the first embodiment. A duplicated description of steps S501 to S504 is not given herein, but step S505 and following steps are described.

If it is determined in step S504 that the printer 30 is available, the broadcast data processing unit 202 accesses the data broadcast content 602 stored in the storage unit 203 and acquires viewing status information (step S505). By this point of time, the print content 606 must have been stored, in a similar data format to the data broadcast content 602, in the storage unit 203.

In step S506, the extracted information is transferred to the print content 606. Thereafter, in accordance with the extracted information, a sub print-content 609 to be used in partially rewriting the print content 606 is determined (step S507). The sub print-content 609 can be selected from a plurality of sub print-contents which are prepared depending on the above information.

Thereafter, the print content 606 is reconstructed again (step S508). Herein, "reconstruction" refers to converting data into an original BML format or into data described in a similar original language. In a case in which the printer 30 is not adapted to the above data format, the print content 606 is converted into a data format that can be dealt with by the printer 30. Thereafter, step S509 and the following steps are performed in a similar manner to step S409 and the following steps shown in Fig. 4.

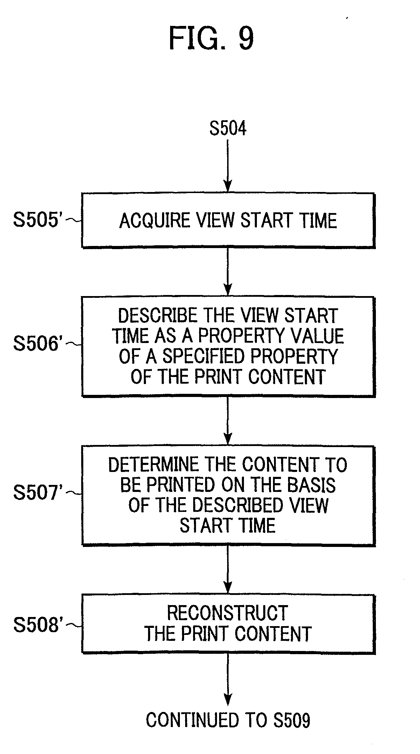

Specific examples of processes performed in steps S505 to S507 are described below. For example, in data broadcasting linked with a long-hour digital broadcast program, outline information of the program to be printed may be varied depending on when a viewer starts to view the program, as described below with reference to a flow chart shown in Fig. 9. If it is determined in step S504 that the printer 30 is available, the data broadcast content 602 stored in the storage unit 203 is accessed and viewing status information is acquired as user information.

In this specific example, the viewing status information is information indicating a relative time at which the viewer started viewing the program (hereinafter, referred to as a view start time). Thus, the time at which the viewer started viewing the program is acquired (step S505'). If necessary, the time at which the program started is also acquired.

If the view start time is acquired, the view start time is written as a property value of the print content 606 stored in the storage unit 203 (step S506'). Information indicating in which property value of the print content 606 the information should be written is described in the data broadcast content 602.

After completion of the above step, for the print content 606 stored in the DOM format or a similar format in the storage unit 203, a sub print-content 609 is selected on the basis of the view start time (step S507'). The sub print-content 609 can be selected from a plurality of sub print-contents which are included in the print content 606 and which are prepared depending on the view start time. In the present example, the sub print-content 609 is data that is a part of the print content 606 stored in the storage unit 203. The sub print-content 609 may be simple text data or may be a combination of text data, a still image, and a graphics image. In this specific example, the sub print-content 609 includes text data and a still image indicating the outline of the program, wherein the outline indicated by the text data and the still image varies depending on the view start time.

After completion of the above step, the print content 606 is reconstructed into a print format that can be dealt with by the printer 30 (step S508').

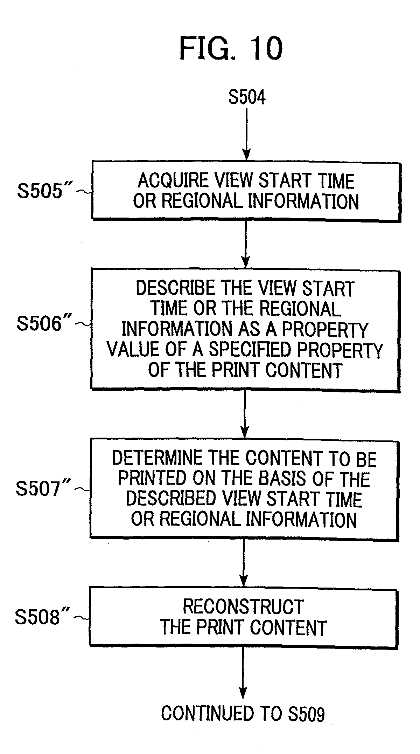

When a coupon or an advertisement can be printed during a broadcast program, the discount rate of the coupon or the content of the advertisement may be varied depending on the cumulative viewing time or a region where the viewer is viewing the program, as described below with reference to a flow chart shown in Fig. 10. If it is determined in step S504 that the printer 30 is available, the data broadcast content 602 stored in the storage unit 203 is accessed and viewing status information is extracted.

The viewing status information may be information indicating the view start time or may be region information. Thus, in step S505'', the view start time or the region information is acquired.

If the view start time or the region information is acquired, the acquired information is written as a property value of the print content 606 stored in the storage unit 203 (step S506''). Information indicating in which property value of the print content 606 the information should be written is described in the data broadcast content 602.

After completion of the above step, the print content 606 stored in the DOM format or a similar format in the storage unit 203 the sub print-content 609 to be printed is determined on the basis of the acquired view start time and/or the region information (step S507''). The sub print-content 609 can be selected from a plurality of sub print-contents which are included in the print content 606 and which are prepared depending on the view start time. In the present example, the sub print-content 609 is data that is a part of the print content 606 stored in the storage unit 203. The sub print-content 609 may be simple text data or may be a combination of text data, a still image, and a graphics image. In this specific example, the sub print-content 609 includes text data and a still image indicating the discount rate of the coupon and/or the advertisement, wherein the discount rate and/or the advertisement are varied depending on the cumulative viewing time and/or the region of the user.

After completion of the above step, the print content 606 is reconstructed into a print format that can be dealt with by the printer 30 (step S508'').

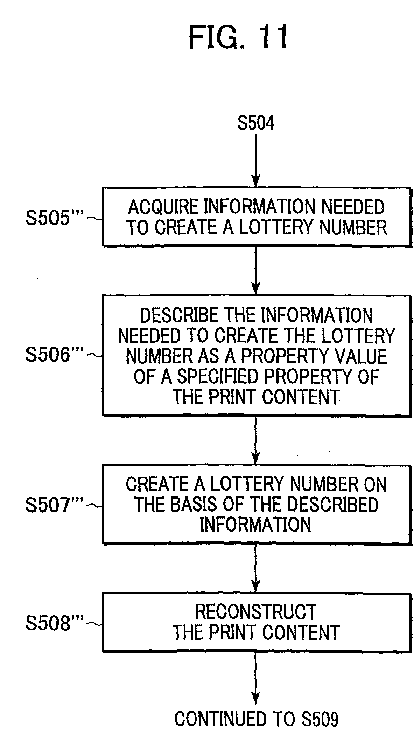

In a data broadcast program, a print content including a lottery number that varies from one digital television set to another may be allowed to be printed at the beginning of the program and winning numbers may be displayed (or printed) at the end of the program, as described below with reference to a flow chart shown in Fig. 11. This process shown in Fig. 7 is performed only at the beginning of the program. In order to make it possible to provide winning numbers at the end of the program, the print content 606 transmitted from the broadcast station 10 must be different between the beginning and the end of the program. If it is determined in step S504 that the printer 30 is available, the data broadcast content 602 stored in the storage unit 203 is accessed and information associated with the viewing status is extracted (step S405''').

Herein, the information associated with the status is used, in a later step, to uniquely determine a lottery number for the digital television set 20. For example, the information associated with the viewing status may be an identification number of the digital television set 20 (or the signal processing apparatus thereof).

If the information is acquired, the information is written as a property value of the print content 606 stored in the storage unit 203 (step S506'''). Information indicating in which property value of the print content 606 the information should be written is described in the data broadcast content 602.

After completion of the above step, for the print content 606 stored in the DOM format or a similar format in the storage unit 203, a sub print-content 609 to be printed is selected on the basis of the acquired information (step S507'''). The sub print-content 609 can be selected from a plurality of sub print-contents which are included in the print content 606 and which are prepared depending on the above information. The sub print-content 609 may be determined in the print content 606 by means of calculation.

After completion of the above step, the print content 606 is reconstructed into a print format that can be dealt with by the printer 30 (step S508"').

In the present embodiment, as described above, when a viewer of a data broadcast program issues a print command to print content 606 multiplexed with broadcast data transmitted from the broadcast station 10, printing is performed in accordance with an operation description in a data broadcast content 602 such that information indicating the viewing status is acquired, a sub print-content 606 is selected from the print content in accordance with the acquired information, the sub print-content 606 is incorporated into the print content to be printed, and printing is performed. This makes it possible to vary the print content to be printed depending on the viewing status. Thus, advantages similar to those achieved in the first embodiment are achieved. Third Embodiment

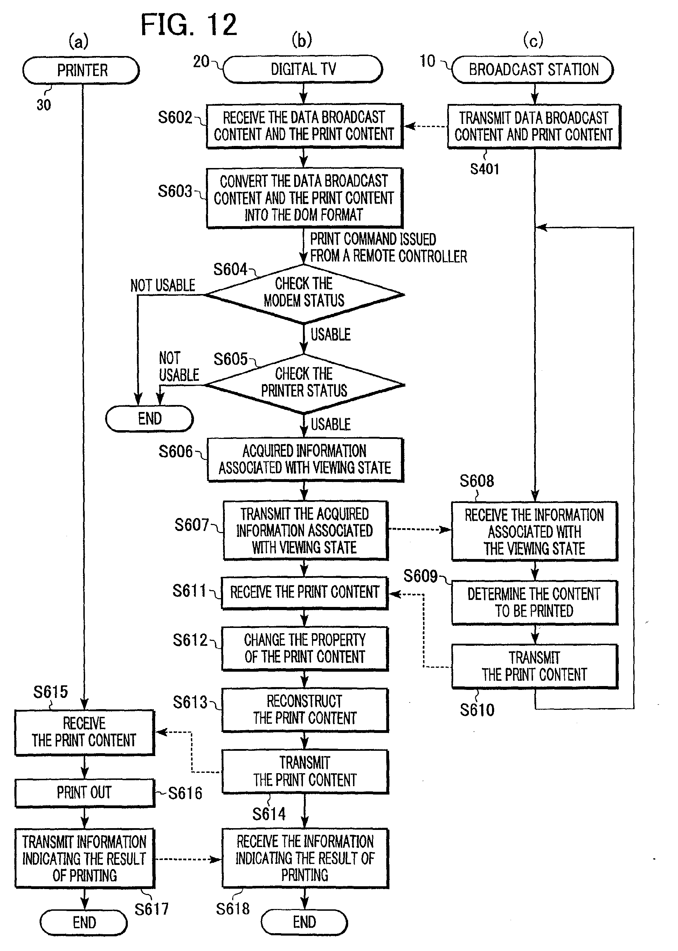

A printing system according to a third embodiment of the present invention is described below. The general system configuration and the configurations of the digital television set 30 and the printer 30 are similar to those employed in the first embodiment described above. Referring to Fig. 12, the printing process performed in the printing system is described below. In Fig. 12, column (a) shows the process performed by the printer 30, column (b) shows the process performed by the digital television set 20, and column (c) shows the process performed by the broadcast station 10.

The broadcast station 10 transmits a data broadcast content 602 and a print content 606 together with broadcast data in a multiplexed fashion to the digital television set 20 (step S601). If the digital television set 20 receives the above data (step S602), the digital television set 20 stores the received data in the storage unit 203 (step S603).

When the digital television set 20 receives the data broadcast content 602 and stores the received data broadcast content 602, the print content 606 is not necessarily received and stored at the same time. In some cases, the print content 606 is received and stored when a print command is issued by a viewer by using a remote controller and is stored in the storage unit 203. When the print content 606 is received and stored depends on the broadcast data. In a case in which the data broadcast content 602 and the print content 606 are identical to each other, the print content 606 is produced by copying the data broadcast content 602 when the data broadcast content 602 is stored in the storage unit 203, and the data broadcast content 602 and the print content 606 are stored separately. This is because the print content 606 must be rewritten in a later step.

The data broadcast content 602 stored in step S603 described above is described in the BML or a similar language, and the data stored in the storage unit 203 is described in the DOM format or a similar format.

After completion of storing data in the storage unit 203 in step S603, the digital television set 20 presents, to a viewer, a screen associated with the data broadcast content 602. The presented screen includes a message prompting the viewer to print data. If the viewer issues a print command using the remote controller, the digital television set 20 checks the status of the modem 206 (step S604).

If it is determined that the modem 206 is available for communication with the outside and the connection with the broadcast station 10 is possible, the status of the printer 30 is checked (step S605). In the case in which the modem 206 is not available for communication with the outside or the connection with the broadcast station 10 is impossible, the printing process is terminated.

If it is determined in step S605 that the printer 30 is not connected or the power of the printer 30 is not turned on and thus printing cannot be performed, the process is terminated without proceeding to the next step. If the printer 30 is available, the broadcast data processing unit 202 accesses the data broadcast content 602 stored in the storage unit 203 and acquires viewing status information (step S606). By this point of time, the print content 606 must have been stored, in a similar data format to the data broadcast content 602, in the storage unit 203.

The extracted information associated with the viewing status is transmitted from the modem 206 to the broadcast station 10 via the Internet (step S607). If necessary, additional information such as the identification information of the data broadcast content 602 being viewed or the identification information of the digital television set 20 is also transmitted.

If the broadcast station 10 receives the information associated with the viewing status from the digital television set 20 (step S608), the broadcast station 10 determines a sub print-content 609 to be used in partially rewriting the print content 606 on the basis of the received information (step S609). If the sub print-content 609 is determined, the broadcast station 10 transmits it to the digital television set 20 via the Internet (step S610). The transmission of the sub print-content 609 may be performed using transmission means installed separately from the broadcast station 10.

If the digital television set 20 receives the sub print-content 609 via the modem 206 (step S611), the digital television set 20 partially rewrites the print content 606 stored in the storage unit 203 in accordance with the procedure described in the data broadcast content 602 (step S612). In the case in which a markup language is used, a property value or text data described between elements (tags) is rewritten on the basis of the sub print-content 609.

Thereafter, the print content 606 is reconstructed again (step S613). Herein, "reconstruction" refers to converting data into an original BML format or into data described in a similar original language. In a case in which the printer 30 is not adapted to the above data format, the print content 606 is converted into a data format that can be dealt with by the printer 30.

Thereafter, the print content 606 and the setting information 605 associated with the printing operation are transmitted to the printer 30 (step S614). The setting information 605 used in printing operation includes information indicating the number of sheets to be printed. The number of sheets to be printed may be described in the data broadcast content 602 or may be specified by a viewer using the remote controller. The setting information 605 used in printing operation may include identification information identifying a content. In the case of BS digital broadcasting, the content identification information may be program identification information described in SI information or a module ID. Furthermore, the setting information 605 used in printing operation may include identification information identifying each matter to be printed.

If the printer 30 receives the print content 606 and the setting information 605 transmitted in step S409 (step S615), the printer 30 makes setting and performs printing on a specified number of sheets (step S616). In some cases, the content identification information is also printed. If the printing is completed, the printer 30 notifies the digital television set 20 of the completion of printing (step S617).

If the digital television set 20 determines, from the notification from the printer 30, that the printing has been successfully completed, the digital television set 20 ends the process (step S618).

The present embodiment may be advantageously applied to specific programs similar to those described above in the first or second embodiment. In the present embodiment, as described above, when a viewer of a data broadcast program issues a print command to print content 606 multiplexed with broadcast data transmitted from the broadcast station 10, printing is performed in accordance with an operation description in a data broadcast content 602 such that information indicating the viewing status is acquired, a sub print-content 606 corresponding to the acquired viewing status information is received from the broadcast station 10 via the Internet, the sub print-content 606 is incorporated into the print content, and the sub print-content 606 is printed. This makes it possible to vary the print content to be printed depending on the viewing status. Thus, advantages similar to those obtained in the first embodiment are achieved. In the example described above, the print data is produced by rewriting the print content using the sub print-content. Although this is preferable to perform printing in a desirable fashion without necessitating reception of a large amount of information associated with the sub print-content via the Internet, the reception of the print content is not necessarily needed. For example, if the sub print-content includes sufficient information to be printed, the print content is not necessary.

If communication between a viewer and the broadcast station 10 is performed each time the viewer performs printing, the broadcast station 10 can acquire detailed information associated with printing performed by the viewer. Furthermore, this allows the broadcast station 10 to recognize which data is printed by which viewer during a program. When it becomes necessary to make modification or addition to the sub print-content 609 forming a part of the print content 606 during a program, the description in the data broadcast content 602 or the print content 606 must be changed in the first and second embodiment, but, in the present embodiment, it is necessary to modify only the sub print-content 609 stored in the broadcast station 10.

### Fourth Embodiment

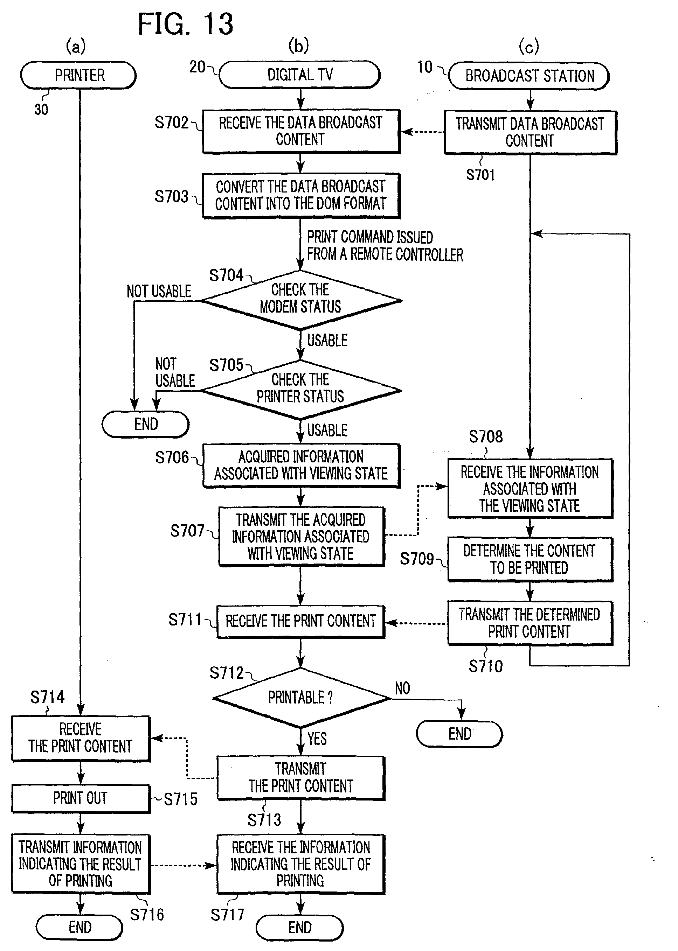

A printing system according to a fourth embodiment of the present invention is described below. The general system configuration and the configurations of the digital television set 40 and the printer 30 are similar to those employed in the first embodiment described above. Referring to Fig. 13, the printing process performed in the printing system is described below. In Fig. 13, column (a) shows the process performed by the printer 30, column (b) shows the process performed by the digital television set 20, and column (c) shows the process performed by the broadcast station 10.

The broadcast station 10 transmits a data broadcast content 602 together with broadcast data in a multiplexed fashion to the digital television set 20 (step S701). If the digital television set 20 receives the above data (step S702), the digital television set 20 stores the received data in the storage unit 203 (step S703).

At this stage, the print content 606 is not yet transmitted together with the broadcast data. The data broadcast content 602 stored in step S603 described above is described in the BML or a similar language, and the data stored in the storage unit 203 is described in the DOM format or a similar format.

After completion of storing data in the storage unit 203 in step S603, the digital television set 20 presents a screen associated with the data broadcast content 602 to a viewer. The presented screen includes a message prompting the viewer to print data. If the viewer issues a print command using the remote controller, the digital television set 20 checks the status of the modem 206 (step S704).

If it is determined that the modem 206 is available for communication with the outside and the connection with the broadcast station 10 is possible, the status of the printer 30 is checked (step S705). In the case in which the modem 206 is not available for communication with the outside or the connection with the broadcast station 10 is impossible, the printing process is terminated.

If it is determined in step S705 that the printer 30 is not connected or the power of the printer 30 is not turned on and thus printing cannot be performed, the process is terminated without proceeding to the next step. If the printer 30 is available, the broadcast data processing unit 202 accesses the data broadcast content 602 stored in the storage unit 203, determines information associated with the viewing status to be acquired as user information, and acquires the information (step S706). The acquired information associated with the viewing status is transmitted from the modem 206 to the broadcast station 10 via the Internet (step S707). If necessary, additional information such as the identification information of the data broadcast content 602 being viewed or the identification information of the digital television set 20 and/or the printer 30 is also transmitted.

If the broadcast station 10 receives the information associated with the viewing status from the digital television set 20 (step S708), the broadcast station 10 determines a print content 606 to be transmitted, on the basis of the received information (step S709). If the print content 606 is determined, the broadcast station 10 transmits it to the digital television set 20 via the Internet (step S710).

If the digital television set 20 receives the print content 606 via the modem 206 (step S711), the digital television set 20 determines whether the printer 30 is capable of dealing with the format of the received print content 606 (step S712). If the printer 30 is not adapted to the format, the printing process is terminated. If the printer 30 is adapted to the format, the print content 606 and the setting information 605 associated with the printing operation are transmitted to the printer 30 (step S713).
The setting information 605 used in printing operation includes information indicating the number of sheets to be printed. The number of sheets to be printed may be described in the data broadcast content 602 or may be specified by a viewer using the remote controller. The setting information 605 used in printing operation may include identification information identifying a content.
In the case of BS digital broadcasting, the content identification information may be program identification information described in SI information or a module ID. Furthermore, the setting information 605 used in printing operation may include identification information identifying each matter to be printed.

If the printer 30 receives the print content 606 and the setting information 605 transmitted in step S713 (step S714), the printer 30 makes setting and performs printing on a specified number of sheets (step S715). In some cases, the content identification information is also printed. If the printing is completed, the printer 30 notifies the digital television set 20 of the completion of printing (step S716).

If the digital television set 20 determines, from the notification from the printer 30, that the printing has been successfully completed, the digital television set 20 ends the process (step S717).

The present embodiment may be advantageously applied to specific programs similar to those described above in the first or second embodiment. In the present embodiment, as described above, when a viewer of a data broadcast program prints a print content 606 downloaded from the broadcast station 10 via the Internet, the print content 606 is changed depending on the viewing status so as to increase the effectiveness and usefulness of a data broadcast program. Thus, similar advantages to those obtained in the first to third embodiments are achieved. If communication between a viewer and the broadcast station 10 is performed each time the viewer performs printing, as in the third embodiment, the broadcast station 10 can acquire detailed information associated with printing performed by the viewer. Furthermore, this allows the broadcast station 10 to recognize which data is printed by which viewer during a program. When it becomes necessary to make modification or addition to the print content 606 during a program, the modification or the addition can be easily and flexibly performed.

### Other Embodiments

Furthermore, the present invention may also be practiced by supplying a software program code implementing the functions of any of the embodiments described above to a computer connected to a plurality of devices or to a computer in a system whereby the computer (CPU or MPU) in the system or the apparatus controls various devices in accordance with the program code. This technique also falls within the scope of the present invention.

In this case, it should be understood that the program code implements the functions of the invention and thus the program code falls within the scope of present invention. The program code may be transmitted on a carrier via a transmission medium (wireless or wired transmission medium such as an optical fiber) used in a computer network system (LAN, WAN such as the Internet, or wireless communication network system).

Means for supplying the program code to the computer, such as a storage medium on which the program code is stored, also falls within the scope of the present invention. Storage media which can be preferably employed in the present invention to store the program code include a floppy disk, hard disk, optical disk, magneto-optical disk, CD-ROM, magnetic tape, non-volatile memory card, and ROM.

Furthermore, the scope of the present invention includes not only such a system in which the functions of any embodiment described above is implemented simply by executing a program code on a computer but also a system in which the functions of any embodiment described above is implemented by the program code in cooperation with a OS (operating system) on which the program runs or in cooperation with another application software.

Furthermore, the program code may be stored into a memory provided on an expansion board inserted into the computer or an expansion unit connected to the computer, and a part of or the whole of process may be executed by a CPU or the like provided on the expansion board or the expansion unit thereby realizing the functions according to the invention. This technique also falls within the scope of the invention.

Various aspects of the present invention are described below.

Aspect 1. A printing system including a digital television set that can be connected directly or via a network to a printer, for printing a print content associated with a data broadcast program transmitted together with broadcasting data in a multiplexed form from a broadcast station, the printing system comprising storage means for storing a data broadcast content and a print content, acquisition means for acquiring information associated with a viewing status on the basis of the stored data broadcast content, determination means for determining a sub print-content to be changed, in accordance with the information associated with the viewing status, rewriting means for rewriting the print content such that a part of the print content is changed on the basis of the determined sub print-content, and reconstructing means for reconstructing the rewritten print content into a print format that can be dealt with by the printer.

Aspect 2. A printing system according to aspect 1, wherein the data broadcast content and the print content are represented in a format that allows structured description and style description of data, and wherein the printing system further comprises means for reconstructing data.

Aspect 3. A printing system according to aspect 2, wherein the format of the data broadcast content and the print content is based on an extended language or language system based on the XML (Extensible Markup Language).

Aspect 4. A printing system according to one of aspects 1 to 3, wherein the storage means stores the data broadcast content and the print content in a data format that allows the data broadcast content and the print content to be written and read with an arbitrary timing.

Aspect 5. A printing system according to aspect 4, wherein the storage means stores the data broadcast content and the print content in a data format according to the DOM (Document Object Model) or in a similar data format.

Aspect 6. A printing system according to one of aspects 1 to 5, wherein the acquisition means acquires the information associated with the viewing status in accordance with an operation procedure described in the stored data broadcast content.

Aspect 7. A printing system according to one of aspects 1 to 6, wherein the determination means selects a particular one of sub print-contents described in the data broadcast content, in accordance with the information associated with the viewing status acquired by the acquisition means.

Aspect 8. A printing system according to one of aspects 1 to 6, wherein the determination means selects a particular one of sub print-contents described in the print content, in accordance with the information associated with the viewing status acquired by the acquisition means.

Aspect 9. A printing system according to one of aspects 1 to 6, wherein the determination means transmits the information associated with the viewing status acquired by the acquisition means to a broadcast station, and wherein the broadcast station selects a particular sub print-content from a plurality of prepared sub print-contents, on the basis of the information associated with the viewing status, and returns the selected sub print-content to the digital television set.

Aspect 10. A printing system according to one of aspects 1 to 9, wherein the rewriting means rewrites the print content by writing a property value of the print content on the basis of the sub print-content or inserting the sub print-content in the form of text data between elements (tags).

Aspect 11. A printing system including a digital television set that can be connected directly or via a network to a printer, for acquiring a print content associated with a data broadcast program via the Internet and printing the acquired print content, the printing system comprising storage means for storing a data broadcast content transmitted from a broadcast station, acquisition means for acquiring information associated with a viewing state on the basis of the stored data broadcast content, transmission means for transmitting the acquired information to a broadcast station, determination means for determining a print content on the basis of the transmitted information, and returning means for returning the determined print content to the digital television set.

Aspect 12. A printing system according to aspect 11, wherein the acquisition means acquires the information associated with the viewing status in accordance with an operation procedure described in the stored data broadcast content.

Aspect 13. A printing system according to one of aspects 1 to 12, wherein the information associated with the viewing status is information associated with a viewing time.

Aspect 14. A printing system according to one of aspects 1 to 12, wherein the information associated with the viewing status is information associated with a viewer.

Aspect 15. A printing system according to one of aspects 1 to 12, wherein the information associated with the viewing status is information associated with a particular identification number.

Aspect 16. A digital television set that can be connected directly or via a network to a printer and has a capability of printing a print content associated with a data broadcast program transmitted together with broadcasting data in a multiplexed form from a broadcast station, the digital television set comprising storage means for storing a data broadcast content and a print content, acquisition means for acquiring information associated with a viewing state on the basis of the stored data broadcast content, determination means for determining a sub print-content to be changed, in accordance with the information associated with the viewing status, rewriting means for rewriting the print content such that a part of the print content is changed on the basis of the determined sub print-content, and reconstructing means for reconstructing the rewritten print content into a print format that can be dealt with by the printer.

Aspect 17. A digital television set that can be connected directly or via a network to a printer and has a capability of acquiring a print content associated with a data broadcast program via the Internet and printing the acquired print content, the digital television set comprising storage means for storing a data broadcast content transmitted from a broadcast station, acquisition means for acquiring information associated with a viewing state on the basis of the stored data broadcast content, transmission means for transmitting the acquired information to a broadcast station, and reception means for receiving a print content that is determined at the broadcast station on the basis of the transmitted information and returned from the broadcast station.

Aspect 18. A data broadcast printing method for printing a print content associated with data broadcast program transmitted together with broadcasting data in a multiplexed form from a broadcast station, by using a printing system including a digital television set that can be connected directly or via a network to a printer, the method comprising the steps of storing a data broadcast content and a print content, acquiring information associated with a viewing status on the basis of the stored data broadcast content, determining a sub print-content to be changed, in accordance with the information associated with the viewing status, rewriting the print content such that a part of the print content is changed on the basis of the determined sub print-content, reconstructing the rewritten print content into a print format that can be dealt with by the printer, and printing the reconstructed print content.

Aspect 19. A data broadcast printing method for acquiring a print content associated with a data broadcast program via the Internet and printing the acquired print content, by using a printing system including a digital television set that can be connected directly or via a network to a printer, the method comprising the steps of storing a data broadcast content transmitted from a broadcast station, acquiring information associated with a viewing status on the basis of the stored data broadcast content, transmitting the acquired information to a broadcast station, determining a print content on the basis of the transmitted information, returning the determined print content to the digital television set, and printing the returned print content.

Aspect 20. A program for executing, in a printing system including a digital television set that can be connected directly or via a network to a printer, a process of printing a print content associated with a data broadcast program transmitted together with broadcasting data in a multiplexed form from a broadcast station, the process comprising the steps of storing a data broadcast content and a print content, acquiring information associated with a viewing status on the basis of the stored data broadcast content, determining a sub print-content to be changed, in accordance with the information associated with the viewing status, rewriting the print content such that a part of the print content is changed on the basis of the determined sub print-content, reconstructing the rewritten print content into a print format that can be dealt with by the printer, and printing the reconstructed print content.

Aspect 21. A program for executing, in a printing system including a digital television set that can be connected directly or via a network to a printer, a process of acquiring a print content associated with a data broadcasting program via the Internet and printing the acquired print content, the process comprising the steps of storing a data broadcast content transmitted from a broadcast station, acquiring information associated with a viewing status on the basis of the stored data broadcast content, transmitting the acquired information to a broadcast station, determining a print content on the basis of the transmitted information, returning the determined print content to the digital television set, and printing the returned print content.

Aspect 22. A computer-readable storage medium on which a program according to aspect 20 or 21 is stored.

As can be understood from the above description, the present invention makes it possible to realize a novel signal processing apparatus, perception apparatus and printing apparatus.

While the present invention has been described with reference to what are presently considered to be the preferred embodiments, it is to be understood that the invention is not limited to the disclosed embodiments. On the contrary, the invention is intended to cover various modifications and equivalent arrangements included within the spirit and scope of the appended claims. The scope of the following claims is to be accorded the broadest interpretation so as to encompass all such modifications and equivalent structures and functions.

## Claims

1. A signal processing apparatus comprising:
a receiving circuit (205) for receiving data transmitted from a sender so as to be simultaneously receivable by a plurality of receivers; and
a processing circuit (202, 203, 204, 206, and 207) for outputting, to a printer (30), print data in accordance with both of the data received by the receiving circuit and user information of a user of the signal processing apparatus.

2. A signal processing apparatus according to claim 1, wherein the processing circuit (202, 203, 204, 206, and 207) includes at least a circuit for generating the print data to be output to the printer by extracting, on the basis of user information, a part of the received data transmitted so as to be simultaneously receivable by the plurality of receivers.

3. A signal processing apparatus according to claim 2, wherein the data transmitted so as to be simultaneously receivable by the plurality of receivers includes data selectable as data to be used in the print data and also includes data for use in sequentially generating stimuli perceptible by a user via a perception device.

4. A signal processing apparatus according to claim 1, wherein the processing circuit (202, 203, 204, 206, and 207) includes at least a circuit (206) for outputting, to the outside of the signal processing apparatus, a signal for requesting the print data or data from which the print data is obtainable, in accordance with data transmitted so as to be simultaneously receivable by the plurality of receivers and in accordance with information associated with a user of the signal processing apparatus.

5. A signal processing apparatus according to one of claims 1 to 4, wherein the user information includes at least information indicating a behavior history of the user.

6. A signal processing apparatus according to claim 3 or either of claims 4 or 5 when dependent on claim 3, wherein the data transmitted so as to be simultaneously receivable by the plurality of receivers includes at least data for use in sequentially generating stimuli perceptible by a user via the perception device (201), and the information indicating the behaviour history of the user is information indicating times at or for which the user perceived the stimuli generated on the basis of the data.

7. A signal processing apparatus according to one of claims 1 to 6, wherein the user information includes at least information indicating a property of the user.

8. A signal processing apparatus according to one of claims 1 to 7, wherein the user information includes at least identification information for identifying the signal processing apparatus.

9. A signal processing apparatus according to one of claims 1 to 8, wherein the user information is acquired on the basis of data received by the receiving circuit.

10. A perception apparatus comprising a perception device (201) and a signal processing apparatus according to one of claims 1 to 9, wherein the data transmitted so as to be simultaneously receivable by the plurality of receivers includes at least data for use in sequentially generating stimuli perceptible by a user via the perception apparatus.

11. A printing apparatus comprising a signal processing apparatus according to one of claims 1 to 9 and a printer for printing in accordance with the print data output from the processing circuit.

12. A broadcasting method comprising the step of transmitting first data for producing print data to be printed by a printer and second data specifying signal processing to be performed on the first data to produce the print data depending on information associated with a user of a particular signal processing apparatus, in such a manner that the first data and the second data can be simultaneously received by a plurality of signal processing apparatuses.
